# EUROPEAN PATENT SPECIFICATION

(11) **EP 0 916 623 B1**
(45) Date of publication and mention of the grant of the patent: **28.04.2004**
(21) Application number: 98121792.0
(22) Date of filing: 16.11.1998
(51) Int. Cl.: C03B 37/027, C03B 37/012, C03B 37/014

(54) **Method for storing, heating and drawing a glass preform**
Verfahren zum Aufbewaren, Erwärmung und Ziehen einer Glasvorform
Procédé de stockage, chauffage et d'étirage d'une préforme en verre

(30) Priority: 17.11.1997 JP 31511797
(43) Date of publication of application: 19.05.1999
(60) Divisional application: 03019333.8
(73) Proprietor: Shin-Etsu Chemical Co., Ltd., Chiyoda-ku Tokyo 100 (JP)
(72) Inventor: Sakashita, Mitsukuni c/o Shin-Etsu Chem. Co., Ltd., Annaka-shi, Gunma Prefecture (JP); Hoshino, Shoji c/o Shin-Etsu Chem. Co., Ltd., Annaka-shi, Gunma Prefecture (JP); Shimada, Tadakatsu c/o Shin-Etsu Chem. Co., Ltd., Annaka-shi, Gunma Prefecture (JP); Yamamura, Waichi c/o Shin-Etsu Chem. Co., Ltd., Annaka-shi, Gunma Prefecture (JP); Hirasawa, Hideo c/o Shin-Etsu Chem. Co., Ltd., Annaka-shi, Gunma Prefecture (JP)
(74) Representative: von Bülow, Tam, Dr.

(56) References cited:
- DE-A- 3 929 894
- PATENT ABSTRACTS OF JAPAN vol. 18, no. 558 (C-1264), 25 October 1994 -& JP 06 199536 A (SUMITOMO ELECTRIC IND. LTD.), 19 July 1994
- PATENT ABSTRACTS OF JAPAN vol. 17, no. 400 (C-1089), 27 July 1993 & JP 05 078139 A (SHIN-ETSU CHEM CO., LTD.), 30 March 1993
- PATENT ABSTRACTS OF JAPAN vol. 13, no. 49 (C-565), 3 February 1989 -& JP 63 242938 A (TATSUTA ELECTRIC WIRE & CABLE CO., LTD.), 7 October 1988

## Description

### BACKGROUND OF THE INVENTION

### 1. Field of the Invention

The present invention relates to a glass base material drawing method for heating and drawing a glass base material for drawing a glass rod until the outside diameter of the glass rod reaches a prescribed value to obtain a glass rod having a prescribed diameter (for example, an optical fiber base material).

### 2. Description of the Related Art

JP-A-06 199 536 discloses an apparatus and method for drawing an optical fiber from a preform which is stored in a cylindrical housing chamber. The housing chamber consists of two half cylinders which can be moved sidewards allowing the introduction of the preform. Below the housing chamber there is provided a drawing chamber comprising a heater. Between the housing chamber and the drawing chamber there is provided a shutter.

DE-A-39 29 894 describes a method and apparatus for drawing an optical fiber from cylindrical preforms which are stored in a magazine. The preforms are introduced into a chuck and moved downwards thereby joined end-to-end at the top of the preform. The preform is heated by a furnace which melts the glass material for generating an optical fiber.

JP-A-05 078 139 describes an optical fiber drawing device comprising several pairs of taking-off units for taking-off a preform vertically downwards.

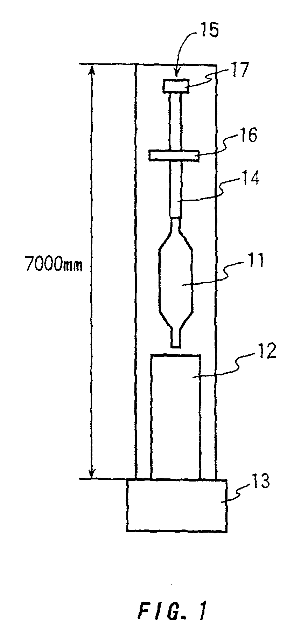

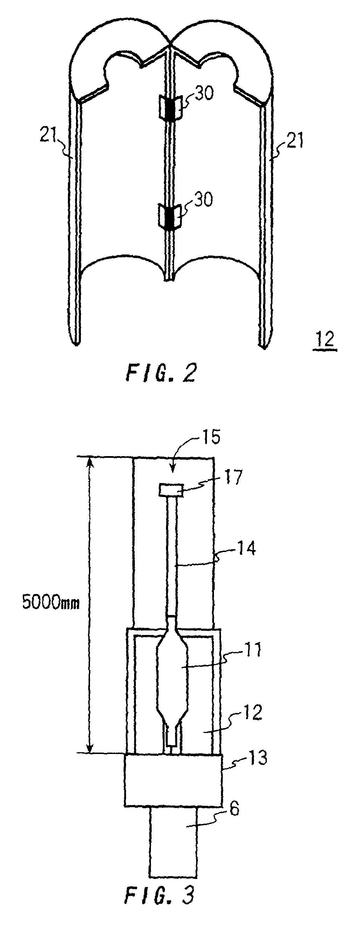

Fig. 1 is a schematic drawing of the neighborhood of a heating furnace of a glass base material drawing method nearby according to the prior art. When an optical fiber base material is drawn until the diameter of the optical fiber base material reaches a desired value, it is necessary to prevent foreign materials in the air from adhering to the pre-drawn glass base material 11 before the pre-drawn glass base material 11 is placed in a heating furnace 13. In order to achieve this objective, the glass base material 11 must be held in a storing container 12 before the glass base material 11 is placed in the heating furnace 13. In the prior art, a cylindrical container as shown in Fig. 3 was used as a storing container, and the cylindrical container was kept airtight by closing the top of the storing container 12 with a lid 16.

When the conventional cylindrical container 12 is used, however, the glass base material 11 needs to be shifted temporarily upward above the storing container 12 in order to install the glass base material 11 to the drawing method. For this reason, the glass base material drawing method is made very large. As the size of the glass base material 11 is increased, the size of the storing container is also increased. As a result, the size of the drawing method is also increased. Therefore, the operation efficiency of the drawing method deteriorates.

### SUMMARY OF THE INVENTION

Given this problem, it is an object of the present invention to provide a method for drawing a glass base material which solves the above-stated problem.

According to the first aspect of the present invention, a glass base material drawing method for heating and drawing a glass base material is provided comprising the steps of:
opening an storage unit, which stores said glass base material, along a longitudinal direction of said storage unit;
storing said glass base material into an interior of said opened storage unit that was opened by said opening;
heating said glass base material stored in said storage unit that has been opened in said step of opening said storage unit;
pulling out said glass base material that has been heated in said step of heating said glass base material; and
that said storing said glass base material moves said glass base material from a side direction of said storage unit into said interior of said storage unit and then installs said glass base material inside said storage unit.

According to a further development of the invention a main axis connected to said glass base material is installed inside a penetration hole front on said storage unit in said step of storing said glass base material.

Said main axis is moved from said side direction of said storage unit to a position that passes through said penetration hole in said step of storing said glass base material. When the opening unit is opened, at least a portion of the circumference of the penetration hole may be opened in said step of opening said storage unit. The storage unit may have, for example, a cylindrical pipe unit and an end surface formed on the top surface of the pipe unit. The opening unit may be formed at the center of the end surface.

The storage unit is divisible into two or more sub-storage units along the axial direction of the storage unit. The opening unit may be opened by moving at least one of the sub-storage units away from the remaining sub-storage units. The storage unit may further have hinges which couple the two or more sub-storage units with each other. The storage unit may be divisible into two sub-storage units by a plane that passes through the axis of the storage unit.

### BRIEF DESCRIPTION OF THE DRAWINGS

- Fig. 1: is a schematic view of the neighborhood of a heating furnace of a conventional glass base material drawing method.
- Fig. 2: is an oblique view of an example of a storing container used by the method of the present invention.
- Fig. 3: is a schematic view of the neighborhood of a heating furnace of a glass base material drawing method according to the present invention when the storing container is opened.
- Fig. 4: is an oblique view of a conventional storing container.
- Fig. 5: shows the structure of a storage unit 12 used in another embodiment of the present invention.

### DETAILED DESCRIPTION OF THE INVENTION

Fig. 2 shows an example of a storing container 12 installed in a glass base material drawing apparatus used with the method of the present invention. This storing container 12 is constructed as follows. First, a cylinder is cut vertically into two identical half-cylinders 21 along a plane containing the central axis of the cylinder. The two holf-cylinders 21 are then connected with hinges 30 as shown in Fig. 2. Hence, the resultant storage container 12 can be opened or closed freely.

When a glass base material 11 is installed on the drawing method, the storage container 12 is opened to store the glass base material 11 in the storage container 12 from a side direction. Once the glass base material 11 is stored inside the storage container 12, the storage container 12 is closed. Thus, the storage container 12 is kept airtight.

As a result, the glass base material 11 does not need to be shifted upward to the top portion of the storage container 12 when the glass base material 11 is installed. Therefore, the shift distance of the glass base material 11 can be reduced in installing the glass base material 11. As a result, the height of the drawing method can be reduced in comparison with the conventional storing container that cannot be opened or closed.

The above-described storage container 12 is divided into two parts. However, the storage container 12 may be divided into three or more parts. It is desirable to divide the storage container 12 into two to four parts to manufacture and operate the storage container 12 easily. It is also desirable to divide the storage container 12 along the longitudinal direction.

The storage container 12 can be made of a conventional material. However, it is desirable tat the storage container 12 be made of stainless steel or the like to make the storage container 12 heat resistant. It is also desirable that the storage container 12 be completely sealed with hinges so that dusts will not be generated when the storage container 12 is opened or closed.

In addition to the storage container 12, the glass base material drawing apparatus used with the method of the present invention has a heating furnace 13 which heats and softens a glass base material 11, a supply mechanism 17 which supplies a glass base material 11, and a pull-out mechanism 6 for pulling out the glass base material 11 heated by the heating furnace 13.

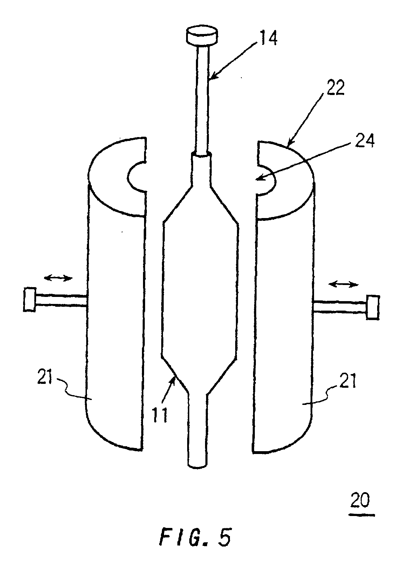

Fig. 5 shows the structure of a storage unit 12 used in another embodiment of the present invention. The storage unit 12 is divided into two half-cylinder units 21. In a state in which the two half-cylinder units 21 are closed, the storage unit 12 has a cylindrical shape. A circular penetration hole 24 is formed at the center of the top surface 22 of the storage unit 12. By moving one of the two half-cylinder units 21 away from the other of the two half-cylinder units 21 or by moving the two half-cylinder units 21 away from each other, the main axis 14 and the glass base material 11 can be installed from a side direction of the storage unit 12 into the interior of the storage unit 12. After this, by closing the two half-cylinder units 21, the glass base material 11 and the main axis 14 can be stored inside the storage unit 12.

Next, an example of the present invention will be explained.

### (EXAMPLE)

A cylindrical glass base material storage container 12, which has a diameter of 210mm and a height of 1800mm and is divided into two parts coupled by hinges 30 as shown in Fig. 2, was prepared. This storage container 12 was installed on a glass base material drawing apparatus having a heating furnace 13, a supply mechanism 17, and a pull-out mechanism 6 as shown in Fig. 3.

A glass rod having a diameter of 150mm and a length of 2500mm was installed as a glass base material 11 on this glass base material drawing apparatus. The glass base material 11 can be drawn if the length of the main axis 14 is 2000mm. Taking this length and the length 2500mm of the glass base material 11 into consideration, the length of the frame 15 of the drawing apparatus measured from the top surface of the heating furnace 13 to the top surface of the frame 15 turned out to be about 5m.

### (COMPARATIVE EXAMPLE)

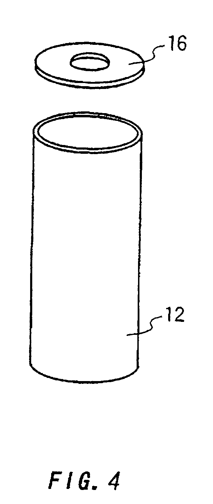

Except that the conventional storage container shown in Fig. 3 was used, a glass base material drawing apparatus was constructed in the same manner as in the above-described embodiment (see Fig. 4).

A length of approximately 2000mm was needed for the height of the storage container 12 as well as for the length of the main axis 14. Combining these lengths with the length of the glass base material 11, a length of approximately 7m was needed for the length of the frame 15 of the drawing apparatus in the direction of the axis before the glass base material 11 was placed in the heating furnace 13. The refuge shift length of the glass base material 11 when the glass base material 11 was installed turned out to be 2000mm.

According to the present invention, the glass base material does not need to be shifted upward in the axial direction to give refuge to the storage container. Therefore, the shift length of the glass base material in installing the glass base material on the drawing apparatus is reduced. As a result, the glass base material can beinstalled more easily, and the overall size of the drawing apparatus is also reduced.

## Claims

1. A glass base material drawing method for heating and drawing a glass base material (11) comprising the steps of:
opening a storage unit (12), which stores said glass base material (11), along a longitudinal direction of said storage unit (12);
storing said glass base material (11) into an interior of said opened storage unit (12) that was opened by said opening;
heating said glass base material (11) stored in said storage unit (12) that has been opened in said step of opening said storage unit (12); and
pulling out said glass base material (11) that has been heated in said step of heating said glass base material (11);
**characterized in that** said storing said glass base material (11) moves said glass base material (11) from a side direction of said storage unit (12) into said interior of said storage unit (12) and then installs said glass base material inside said storage unit (12).

2. A glass base material drawing method as claimed in claim 1, **characterized in that** a main axis (14) connected to said glass base material (11) is installed inside a penetration hole (24) formed on said storage unit (12) in said step of storing said glass base material (11).

3. A glass base material drawing method as claimed in claim 1, **characterized in that** said main axis (14) is moved from said side direction of said storage unit (12) to a position that passes through said penetration hole (24) in said step of storing said glass base material (11).

4. A glass base material drawing method as claimed in claim 3, **characterized in that** at least a portion of a circumference of said penetration hole (24) is opened in said step of opening said storage unit (12).

5. A glass base material drawing method as claimed in claim 2, **characterized in that** said storage unit has a pipe and an end surface (22) formed on a top surface of said pipe and said main axis (14) is installed inside said penetration hole (24) formed at a center of said end surface (22) in said step of storing said glass base material (11).

6. A glass base material drawing method as claimed in claim 3, **characterized in that** said storage unit is divisible into two or more sub-storage units (21) along an axis of said storage unit and said step of opening said storage unit (12) has a step of moving at least one of said sub-storage units (21) away from other sub-storage units (21).

7. A glass base material drawing method as claimed in claim 6, **characterized in that** said storage unit further has hinges (30), which couple said two or more sub-storage units (21) with each other and said step of opening said storage unit (12) has a further step of opening said storage unit (12) centered around said hinges (30) and moving at least one of said sub-storage units (21) away from other sub-storage units (21).

8. A glass base material drawing method as claimed in claim 6, **characterized in that** said step of opening said storage unit (12) has a further step of dividing said storage unit (12) into two sub-storage units (21) by a plane passing through said axis of said storage unit (12).

## Patentansprüche

1. Verfahren zum Ziehen eines Glas-Rohmaterials zum Erwärmen und Ziehen eines Glas-Rohmaterials (11) mit folgenden Schritten:
Öffnen einer Behältereinheit (12), die das Glas-Rohmaterial (11) aufnimmt, entlang einer Längsrichtung der Behältereinheit (12);
Einbringen des Glas-Rohmaterials (11) in einen Innenraum der geöffneten Behältereinheit (12), die durch das genannte Öffnen geöffnet wurde;
Erwärmen des Glas-Rohmaterials (11), das in der Behältereinheit (12) enthalten ist, die durch den Schritt des Öffnens der Behältereinheit (12) geöffnet wurde; und
Ziehen des Glas-Rohmaterials (11), das in dem Schritt des Erwärmens des Glas-Rohmaterials (11) erwärmt wurde;
**dadurch gekennzeichnet,**
**daß** das Einbringen des Glas-Rohmaterials (11) das Glas-Rohmaterial (11) von einer Seitenrichtung der Behältereinheit (12) in den Innenraum der Behältereinheit (12) bewegt und dann das Glas-Rohmaterial innerhalb der Behältereinheit (12) einbringt.

2. Verfahren zum Ziehen eines Glas-Rohmaterials nach Anspruch 1, **dadurch gekennzeichnet,**
**daß** eine Hauptachse (14) bezüglich des Glas-Rohmaterials (11) innerhalb eines Durchgangsloches (24), das an der Behältereinheit (12) ausgebildet ist, beim Schritt des Einbringens des Glas-Rohmaterials (11) gebildet wird.

3. Verfahren zum Ziehen eines Glas-Rohmaterials nach Anspruch 1, **dadurch gekennzeichnet,**
**daß** die Hauptachse (14) von der Seitenrichtung der Behältereinheit (12) in eine Position bewegt wird, die durch das Durchgangsloch (24) beim Schritt des Einbringens des Glas-Rohmaterials (11) hindurchtritt.

4. Verfahren zum Ziehen eines Glas-Rohmaterials nach Anspruch 3, **dadurch gekennzeichnet,**
**daß** zumindest ein Teil eines Umfanges des Durchgangsloches (24) beim Schritt des Öffnens der Behältereinheit (12) geöffnet wird.

5. Verfahren zum Ziehen eines Glas-Rohmaterials nach Anspruch 2, **dadurch gekennzeichnet,**
**daß** die Behältereinheit ein Rohr und eine Endfläche (22) aufweist, die an der Oberfläche des Rohrs ausgebildet ist, und daß die Hauptachse (14) innerhalb des Durchgangsloches (24) an der Mitte der Endfläche (22) beim Schritt des Einbringens des Glas-Rohmaterials (11) eingerichtet wird.

6. Verfahren zum Ziehen eines Glas-Rohmaterials nach Anspruch 3, **dadurch gekennzeichnet,**
**daß** die Behältereinheit in zwei oder mehr Unter-Behältereinheiten (21) längs einer Achse der Speichereinheit teilbar ist und daß der Schritt des Öffnens der Behältereinheit (12) einen Schritt des Bewegens von mindestens einer der Unter-Behältereinheiten (21) fort von anderen Unter-Behältereinheiten (21) beinhaltet.

7. Verfahren zum Ziehen eines Glas-Rohmaterials nach Anspruch 6, **dadurch gekennzeichnet,**
**daß** die Behältereinheit weiterhin Scharniere (30) aufweist, die die zwei oder mehr Unter-Behältereinheiten (21) miteinander koppelt, und daß der Schritt des Öffnens der Behältereinheit (12) einen weiteren Schritt des Öffnens der Behältereinheit (12) zentriert bezüglich der Scharniere (30) enthält und ein Bewegen von mindestens einer der Unter-Behältereinheiten (21) fort von den anderen Unter-Behältereinheiten (21).

8. Verfahren zum Ziehen eines Glas-Rohmaterials nach Anspruch 6, **dadurch gekennzeichnet,**
**daß** der Schritt des Öffnens der Behältereinheit (12) einen weiteren Schritt des Teilens der Behältereinheit (12) in zwei Unter-Behältereinheiten (21) bezüglich einer Ebene, die durch die Achse der Behältereinheit (12) verläuft, enthält.

## Revendications

1. Procédé d'étirage de matériau à base de verre pour échauffer et étirer un matériau à base de verre (11), comprenant les étapes de :
- ouvrir une unité de stockage (12), qui stocke ledit matériau à base de verre (11), le long d'une direction longitudinale de ladite unité de stockage (12) ;
- stocker ledit matériau à base de verre (11) en le faisant pénétrer dans un espace intérieur de ladite unité de stockage (12) ouverte qui a été ouverte par ladite étape d'ouverture ;
- chauffer ledit matériau à base de verre (11) stocké dans ladite unité de stockage (12) qui a été ouverte lors de ladite étape d'ouverture de ladite unité de stockage (12) ; et
- tirer vers l'extérieur ledit matériau à base de verre (11) qui a été chauffé au cours de ladite étape d'échauffement dudit matériau à base de verre (11) ;
**caractérisé en ce que** ladite étape de stockage dudit matériau à base de verre (11) déplace ledit matériau à base de verre (11) depuis une direction latérale de ladite unité de stockage (12) pour le faire pénétrer dans ledit espace intérieur de ladite unité de stockage (12) puis installe ledit matériau à base de verre à l'intérieur de ladite unité de stockage (12).

2. Procédé d'étirage de matériau à base de verre tel que revendiqué dans la revendication 1, **caractérisé en ce qu'**un axe principal (14) connecté audit matériau à base de verre (11) est installé à l'intérieur d'un trou de pénétration (24) formé sur ladite unité de stockage (12) au cours de ladite étape de stockage dudit matériau à base de verre (11).

3. Procédé d'étirage de matériau à base de verre tel que revendiqué dans la revendication 1, **caractérisé en ce que** ledit axe principal (14) est déplacé depuis ladite direction latérale de ladite unité de stockage (12) jusqu'à une position qui traverse ledit trou de pénétration (24) au cours de ladite étape de stockage dudit matériau à base de verre (11).

4. Procédé d'étirage de matériau à base de verre tel que revendiqué dans la revendication 3, **caractérisé en ce qu'**au moins une portion de la circonférence dudit trou de pénétration (24) est ouverte au cours de ladite étape d'ouverture de ladite unité de stockage (12).

5. Procédé d'étirage de matériau à base de verre tel que revendiqué dans la revendication 2, **caractérisé en ce que** ladite unité de stockage comporte un tube et une surface d'extrémité (22) formée sur une surface supérieure dudit tube et ledit axe principal (14) est installé à l'intérieur dudit trou de pénétration (24) formé à un centre de ladite surface d'extrémité (22) au cours de ladite étape de stockage dudit matériau à base de verre (11).

6. Procédé d'étirage de matériau à base de verre tel que revendiqué dans la revendication 3, **caractérisé en ce que** ladite unité de stockage est divisible en au moins deux sous-unités de stockage (21) le long d'un axe de ladite unité de stockage, et **en ce que** ladite étape d'ouverture de ladite unité de stockage (12) comporte une étape de déplacer l'une au moins desdites sous-unités de stockage (21) à l'écart des autres sous-unités de stockage (21).

7. Procédé d'étirage de matériau à base de verre tel que revendiqué dans la revendication 6, **caractérisé en ce que** ladite unité de stockage comporte en outre des charnières (30), qui accouplent lesdites au moins deux sous-unités de stockage (21) l'une avec l'autre, et **en ce que** ladite étape d'ouverture de ladite unité de stockage (12) comporte une étape supplémentaire d'ouverture de ladite unité de stockage (12) centrée autour desdites charnières (30) et de déplacement de l'une au moins desdites sous-unités de stockage (21) à l'écart des autres sous-unités de stockage (21).

8. Procédé d'étirage de matériau à base de verre tel que revendiqué dans la revendication 6, **caractérisé en ce que** ladite étape d'ouverture de ladite unité de stockage (12) comporte une étape supplémentaire de division de ladite unité de stockage (12) en deux sous-unités de stockage (21) par un plan passant à travers ledit axe de ladite unité de stockage (12).
